# FASCICULE DE BREVET EUROPEEN

(11) **EP 1 705 104 B1**
(45) Date de publication et mention de la délivrance du brevet: **22.08.2007**
(21) Numéro de dépôt: 06300253.9
(22) Date de dépôt: 21.03.2006
(51) Int. Cl.: B62D 37/02

(54) **Dispositif destiné à compenser des perturbations provoquées par un vent latéral sur un véhicule automobile**
Vorrichtung zum Kompensieren der Störungen durch Seitenwind auf ein Kraftfahrzeug
Device to compensate perturbancies from sidewind on a motor vehicle

(30) Priorité: 22.03.2005 FR 0502819
(43) Date de publication de la demande: 27.09.2006
(73) Titulaire: PEUGEOT CITROËN AUTOMOBILES S.A., 78140 Velizy Villacoublay (FR)
(72) Inventeur: Giret, Mikaël, 75013 Paris (FR); Tailhades, Olivier, 75015 Paris (FR); Leroy, Matthieu, 78330 Fontenay le Fleury (FR)

(56) Documents cités:
- EP-A- 0 282 590
- DE-A1- 3 630 435
- US-A- 4 379 582
- US-A- 5 013 080
- US-A- 5 119 673

## Description

L'invention concerne un dispositif pour véhicule destiné à compenser des perturbations provoquées par un vent latéral lorsque le véhicule roule.

Un véhicule qui subit un vent latéral est soumis à des écoulements d'air qui sont distribués de façon asymétrique par rapport à un plan de symétrie longitudinal du véhicule entre le côté du véhicule qui est exposé au vent latéral, dit côté exposé, et le côté opposé, dit côté abrité. Ces écoulements asymétriques tendent à faire tourner le véhicule autour d'un axe vertical, et par là même à le faire dévier de sa trajectoire.

Un dispositif pour véhicule automobile destiné à compenser ces perturbations est connu notamment du document US5013080. Il comprend des capteurs de pression latéraux, un amplificateur différentiel, des moteurs et des ailerons latéraux, chaque aileron étant actionné par un moteur qui lui est propre.

Dans ce dispositif connu, les capteurs sont exploités pour évaluer l'intensité et l'orientation du vent et pour transmettre un signal à l'amplificateur différentiel qui commande les moteurs des ailerons appropriés pour que ces ailerons s'ouvrent à la manière d'aérofreins, et afin de générer des efforts aérodynamiques qui contrecarrent les perturbations provoquées par le vent latéral.

Ce dispositif a une conception relativement complexe qui rend son implantation sur un véhicule coûteuse. Les capteurs et les ailerons placés à l'extérieur du véhicule sont soumis d'une part à d'éventuels chocs et dégradent d'autre part l'aspect esthétique du véhicule.

Le but de l'invention est de remédier à ces inconvénients en proposant un dispositif pour véhicule automobile, destiné à compenser des perturbations provoquées par un vent latéral lorsque le véhicule roule, caractérisé en ce qu'il comprend un canal droit et un canal gauche, chaque canal ayant une entrée orientée vers l'avant du véhicule et une sortie située sur un côté du véhicule dans une zone où s'établit une dépression en cas de vent latéral.

Un exemple de cette technique antérieure est divulgué par le document EP 0282590.

Le dispositif selon l'invention ne nécessite pas d'actionneur coûteux, et est par conséquent d'un coût de fabrication très faible le rendant simple à implanter sur des véhicules courants. En cas de vent latéral, ce dispositif compense les effets de l'écoulement asymétrique induits par un vent latéral en réduisant les dépressions qui apparaissent du côté abrité du véhicule. Cependant, en l'absence de vent latéral, le dispositif ne génère pas d'efforts supplémentaires qui tendraient à ralentir le véhicule.

Selon une autre caractéristique de l'invention, chaque canal est équipé d'un organe d'obturation apte à ouvrir ou fermer le canal qu'il équipe.

Selon une autre caractéristique de l'invention, le dispositif comprend un élément de liaison liant en mouvement les deux organes d'obturation pour assurer que l'ouverture d'un canal provoque la fermeture de l'autre canal.

Selon une autre caractéristique de l'invention, les organes d'obturation et l'élément de liaison sont agencés pour permettre aux deux organes d'obturation d'être simultanément fermés.

Selon une autre caractéristique de l'invention, chaque organe d'obturation est un volet mobile entre une première position dans laquelle il ferme le canal qu'il équipe et une deuxième position dans laquelle il ouvre le canal qu'il équipe, ce volet étant apte à pivoter autour d'un axe de rotation coïncidant avec un bord de ce volet qui longe une paroi du canal, ce volet comprenant un bord libre qui se déplace par rapport à une autre paroi du canal lorsque ce volet pivote, et dans lequel lorsque le volet pivote vers sa deuxième position, son bord libre se déplace en direction de la sortie du canal.

Selon une autre caractéristique de l'invention, chaque canal est obstrué lorsque son volet est situé entre la première position et une position médiane, la première position et la position médiane délimitant une zone angulaire de fermeture, dans lequel le canal est ouvert lorsque le volet est situé entre la position médiane et la deuxième position, la position médiane et la deuxième position délimitant une zone angulaire d'ouverture, dans lequel l'élément de liaison comprend une tige mobile ayant une première extrémité liée par une liaison pivot au bord libre du volet du canal droit et une seconde extrémité liée par une autre liaison pivot au bord libre du volet du canal gauche de telle sorte que le volet du canal droit est dans la zone angulaire de fermeture, le volet du canal gauche est dans sa zone angulaire d'ouverture et que lorsque la tige occupe une position symétrique par rapport à un plan de symétrie longitudinal du véhicule, chaque volet occupe sa position médiane.

Selon une autre caractéristique de l'invention, le canal comprend une portion cylindrique ayant un rayon valant la distance séparant l'axe de rotation du volet rotatif de son bord libre, pour que le bord libre du volet rotatif longe cette portion cylindrique lorsque ce volet rotatif se trouve dans la zone angulaire de fermeture.

Selon une autre caractéristique de l'invention, l'organe d'obturation est placé en sortie de canal.

Selon une autre caractéristique de l'invention, l'organe d'obturation est placé sensiblement à mi-longueur du canal.

Selon une autre caractéristique de l'invention, le dispositif comprend au moins un déflecteur placé en sortie de canal, ce déflecteur comprenant un bord fixe solidaire du véhicule et un bord dégagé de telle façon que le déflecteur abrite un flux d'air sortant du canal.

Selon une autre caractéristique de l'invention, le canal droit est symétrique au canal gauche par rapport à un plan de symétrie longitudinal du véhicule et dans lequel les axes de rotation des deux volets sont disposés de façon symétrique par rapport à ce plan de symétrie longitudinal.

L'invention sera maintenant décrite plus en détail, et en référence aux dessins annexés qui en illustrent un mode de réalisation à titre d'exemple non limitatif.

Les figures 1 à 9 se rapportent à un premier mode de réalisation de l'invention. Les figures 10 à 17 se rapportent à un deuxième mode de réalisation.
La figure 1 est une vue en perspective du côté avant gauche d'un véhicule équipé du dispositif selon l'invention ;
La figure 2 est une vue en perspective du côté avant gauche d'un véhicule équipé du dispositif selon l'invention, vu de dessous ;
La figure 3A est une section transversale du côté avant gauche du véhicule au niveau du dispositif selon l'invention;
La figure 3B est une vue en section d'un organe d'obturation du dispositif selon l'invention ;
La figure 4 est une vue en perspective d'un canal du dispositif selon l'invention, représenté seul ;
La figure 5 montre le côté avant gauche d'un véhicule équipé du dispositif selon l'invention, lorsque le volet est fermé ;
La figure 6 montre le côté avant gauche d'un véhicule équipé du dispositif selon l'invention, lorsque le volet est en position médiane ;
La figure 7 montre le côté avant gauche d'un véhicule équipé du dispositif selon l'invention, lorsque le volet est ouvert ;
La figure 8 est une section transversale du dispositif selon l'invention en présence d'un vent latéral venant de droite ;
La figure 9 est une section transversale du dispositif selon l'invention en absence de vent latéral ;
La figure 10 est une vue en perspective du côté avant gauche d'un véhicule muni du dispositif selon l'invention ;
La figure 11 est une vue en perspective du côté avant gauche d'un véhicule muni du dispositif selon l'invention, vu de dessous ;
La figure 12 est une section transversale du côté avant gauche du véhicule au niveau du dispositif selon l'invention;
La figure 13 est une vue en perspective d'un canal du dispositif selon l'invention, représenté seul ;
La figure 14 est un agrandissement de la figure 13 au niveau du volet ;
La figure 15 est une vue en perspective d'un canal du dispositif selon l'invention, représenté seul ;
La figure 16 est une section transversale du dispositif selon l'invention en présence d'un vent latéral venant de droite ;
La figure 17 est une section transversale du dispositif selon l'invention en absence d'un vent latéral.

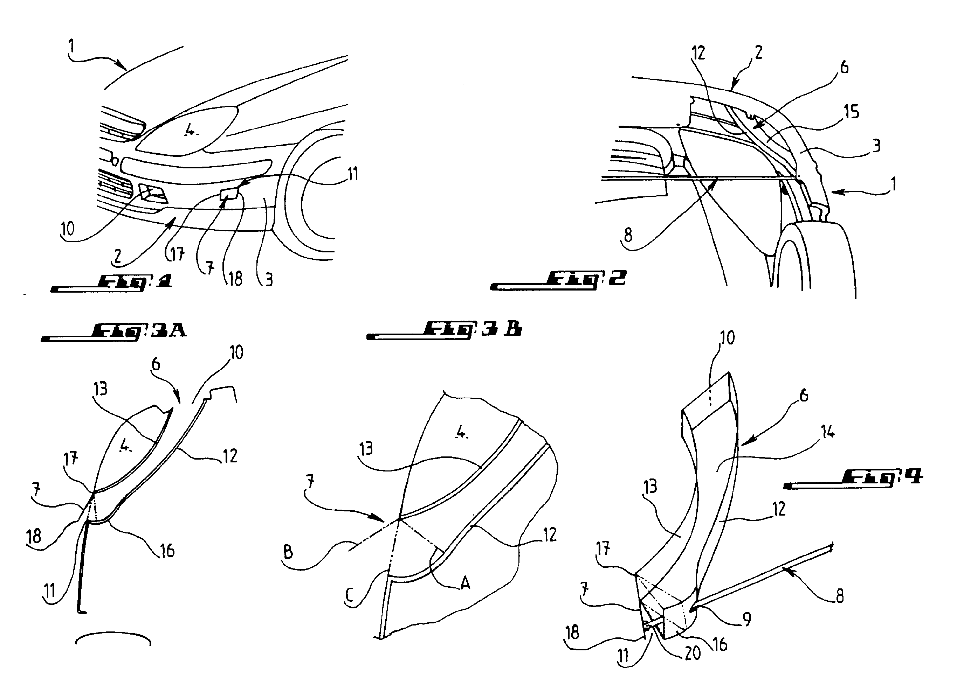

Le dispositif selon l'invention est destiné à équiper un véhicule automobile tel que celui qui est repéré par 1 sur la figure 1. Ce véhicule comprend un pare-chocs avant 2 incluant une partie latérale 3 appelée crosse, au dessus de laquelle est implanté un phare 4.

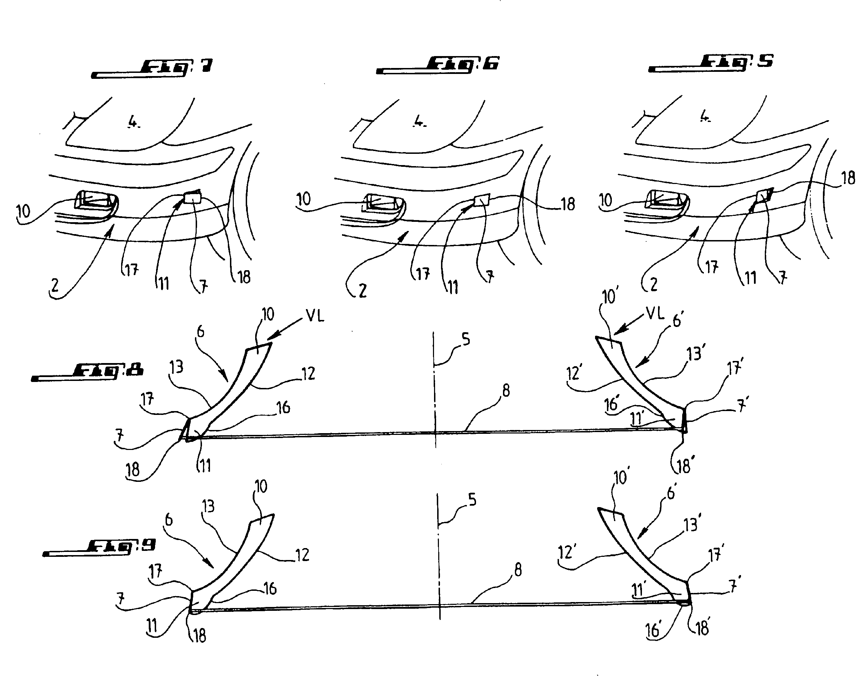

Le dispositif selon l'invention comprend un canal latéral gauche et un canal latéral droit qui sont symétriques par rapport à un plan de symétrie longitudinal et vertical du véhicule 1, ce plan de symétrie étant repéré par 5. Le canal latéral droit est monté dans la partie latérale droite du pare-chocs 2, et le canal latéral gauche 6 est monté de façon symétrique dans la partie latérale gauche du pare-chocs 2, ce qui est représenté sur la figure 2.

Les canaux latéraux droit et gauche étant symétriques l'un de l'autre, la description de ces canaux est faite sur la base du canal de gauche repéré par 6, et est aussi applicable au canal de droite qui porte la référence 6'.

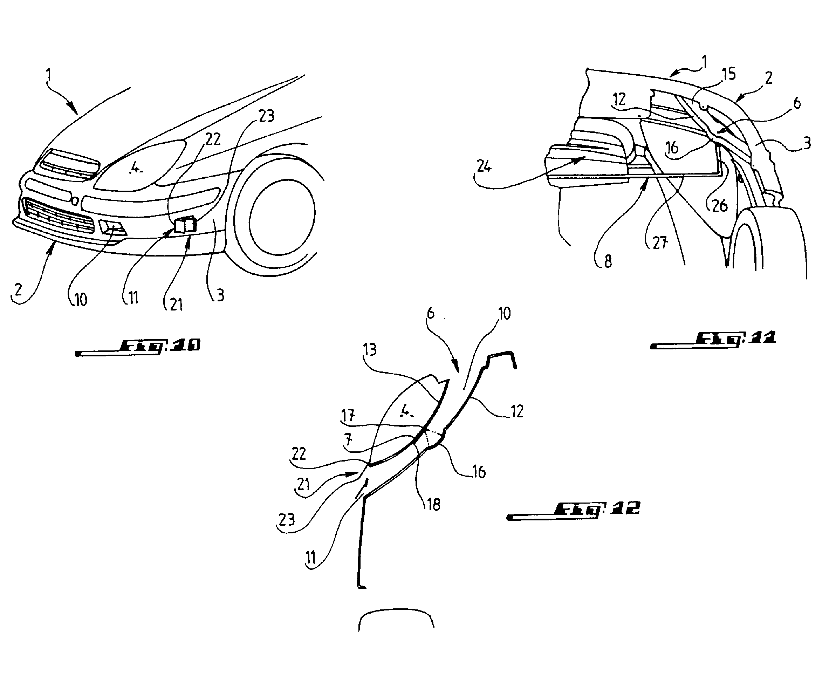

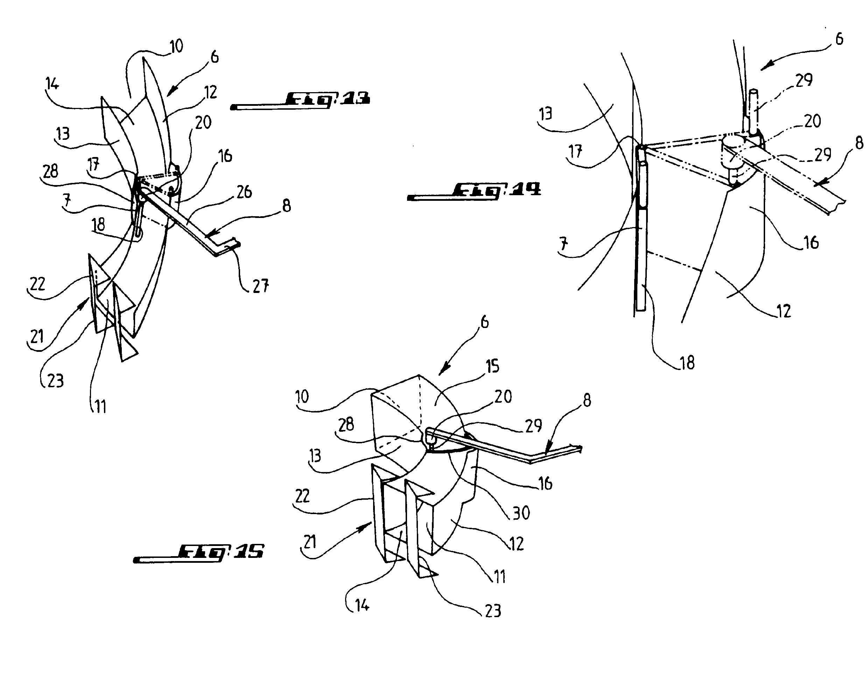

Le canal latéral 6 comprend un organe d'obturation qui se présente sous forme d'un volet 7 dans l'exemple des figures. Le volet du canal gauche 6 porte la référence 7 et est notamment visible sur les figures 3A et 4. Le volet 7 du canal gauche 6 est lié en mouvement au volet équipant le canal droit par une tige 8 mobile s'étendant selon une direction transversale et ayant chacune de ses extrémités solidarisée à un volet 7.

Le canal 6 comprend une entrée 10 orientée vers l'avant du véhicule 1 et une sortie 11 située sur un côté du véhicule 1 dans une zone où s'établit une dépression en cas de vent latéral VL, et il est conçu pour établir une circulation d'air entre son entrée 10 et sa sortie 11.

Plus particulièrement, l'entrée 10 est située vers la gauche de la face avant du pare-chocs 2, et la sortie 11 débouche sur une face latérale gauche de ce pare-choc, c'est-à-dire en avant de la roue avant gauche du véhicule.

Chaque canal comprend quatre parois, deux à deux parallèles définissant une section transversale rectangulaire. Deux des quatre parois sont verticales, la plus proche du plan de symétrie 5 du véhicule 1 est dite paroi interne 12, l'autre est dite paroi externe 13, les deux autres parois, repérées par 14 et 15 étant horizontales.

La paroi interne 12 comprend, en sortie 11 du canal 6, une zone 16 de forme cylindrique destinée à coopérer avec un bord libre 18 du volet 7.

Le volet 7 possède un contour rectangulaire et est monté pivotant autour d'un axe de rotation 17 coïncidant avec un bord de ce volet 7. L'axe de rotation 17 du volet 7 s'étend verticalement et longe la paroi externe 13 en sortie 11 du canal et il coïncide avec l'axe du cylindre de la zone 16. Ce volet 7 comprend un bord libre 18, parallèle à l'axe de rotation 17 du volet 7, ce bord libre 18 pouvant se déplacer le long de la zone cylindrique 16 de la paroi interne 12 lorsque le volet 7 pivote autour de l'axe 17.

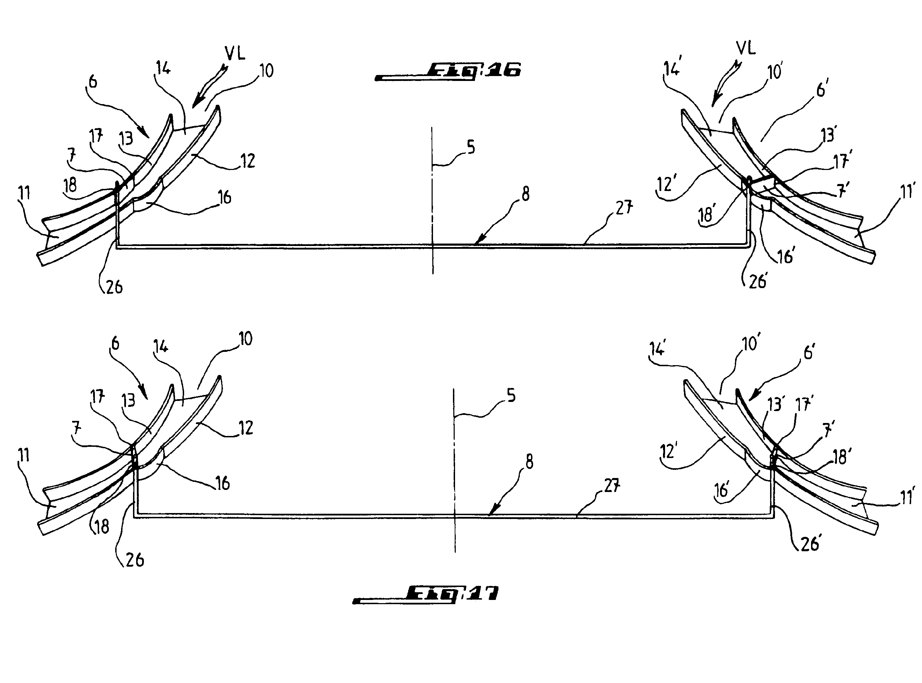

Plus particulièrement, le volet 7 est apte à pivoter entre une première position notée A correspondant à celle qu'il occupe dans la figure 5, dans laquelle il ferme le canal 6, et une deuxième position correspondant aux figures 3A, 4 et 7, dans laquelle il ouvre le canal 6.

Lorsqu'il pivote depuis la première position A vers la deuxième B, le bord libre 18 du volet 7 se déplace en direction de la sortie 11 du canal 6. Ainsi, lorsque la pression en entrée 10 du canal 6 est supérieure à la pression en sortie 11 de ce canal, c'est-à-dire notamment dès que le véhicule roule, cette différence de pression exerce un effort sur le volet 7 tendant à l'ouvrir.

Le canal 6 est fermé lorsque son volet 7 est situé entre la première position A et une position médiane notée C correspondant à la figure 6. Dans cette position médiane C, chaque bord du volet 7 coïncide avec l'un des bords de la sortie 11 du canal, de telle sorte que le volet 7 affleure la surface externe du véhicule 1 comme dans la figure 6. Les trois positions A, B, C que peut occuper le volet 7 sont représentées symboliquement dans la figure 3B.

La première position A et la position médiane C délimitent ainsi une zone angulaire de fermeture du canal qui correspond à la zone cylindrique 16 de la paroi interne 12, c'est-à-dire à la zone dans laquelle le bord libre 18 du volet 7 longe la paroi interne 12.

Le canal est ouvert lorsque son volet 7 est situé entre la position médiane C et la deuxième position B, qui délimitent ainsi une zone angulaire d'ouverture du canal pour laquelle le volet est situé à l'extérieur du véhicule 1.

Lorsque le volet 7 pivote dans cette zone d'ouverture, en plus d'ouvrir le canal, il agit comme un déflecteur pour abriter un flux d'air sortant du canal du flux d'air longitudinal qui longe le véhicule 1 lorsqu'il roule, de manière à favoriser l'évacuation de l'air sortant du canal ainsi qu'à faire remonter les niveaux de pression sur la crosse 3, comme représenté sur les figures 4 et 7.

La partie qui suit se réfère au dispositif dans son ensemble, les différents éléments du canal latéral droit portant les mêmes signes de référence que leur symétrique du canal latéral gauche 6, mais suivis du signe prime « ` ».

La tige 8, qui s'étend transversalement, traverse des orifices 9 et 9' qui sont réalisés dans les portions cylindriques 16 et 16' des parois internes 12 et 12' des canaux 6 et 6', afin que les extrémités 20 et 20' de cette tige atteignent les bords libres 18 et 18' des volets 7 et 7'. Chaque extrémité 20 et 20' de cette tige est reliée par une liaison pivot à un bord libre 18 et 18' d'un volet correspondant 7 et 7', ce qui est visible sur la figure 4.

La tige 8 et les liaisons pivot de ses extrémités 20, 20' aux bords libres correspondants 18, 18' de chaque volet 7, 7' assurent qu'un déplacement du volet 7, dans un sens de rotation, induit un déplacement du volet 7' dans le même sens de rotation, comme l'illustre la figure 8.

La tige 8 a de plus une longueur telle que lorsque son milieu est au niveau du plan de symétrie 5 du véhicule, c'est à dire lorsque le système constitué de la tige 8 et des deux volets 7 et 7' occupe une position symétrique par rapport au plan de symétrie 5, les deux volets occupent alors nécessairement leurs positions médianes C respectives dans lesquelles ils ferment les canaux 6 et 6' qu'ils équipent.

Ainsi, lorsqu'un volet est situé dans sa zone d'ouverture, l'autre volet est nécessairement dans sa zone de fermeture.

Lorsque le véhicule roule, les entrées 10 et 10' des deux canaux 6 et 6' sont à la même pression qui est relativement élevée car ces entrées sont orientées vers l'avant du véhicule. Les sorties 11 et 11' de ces deux canaux sont à des pressions inférieures à la pression d'entrée car ces sorties sont orientées transversalement.

En l'absence de vent latéral VL, les sorties des deux canaux sont à des pressions identiques. Mais en cas de vent latéral VL, les pressions aux sorties 11 et 11' des deux canaux sont différentes l'une de l'autre tout en étant inférieures à la pression aux entrée 10 et 10' des canaux.

Lorsque la pression à l'entrée 10 ou 10' d'un canal est supérieure à la pression en sortie 11 ou 11' de ce canal, cette différence de pression exerce sur le volet 7 ou 7' équipant ce canal un effort tendant à ouvrir ce volet.

Mais le volet 7 du canal gauche et le volet 7' du canal droit sont liés en mouvement par la tige 8, et cette tige a une longueur prévue pour que lorsque le système constitué des volets et de la tige occupe une position symétrique par rapport au plan 5, les deux volets sont nécessairement dans leurs positions médianes respectives C.

Ainsi, lorsque les deux volets 7 et 7' sont soumis à des efforts de même amplitude, c'est à dire lorsque les pressions en sortie des deux canaux sont identiques du fait de l'absence de vent latéral VL, ces deux volets se placent dans leurs positions médianes respectives C et ferment ainsi les deux canaux 6 et 6'. En l'absence de vent latéral VL, les deux volets 7 et 7' ferment donc spontanément les deux canaux 6 et 6', comme visible sur la figure 9.

Mais la tige 8, du fait de sa longueur, assure d'autre part que l'ouverture d'un volet 7 provoque nécessairement la fermeture de l'autre volet 7'.

Lorsqu'un vent latéral VL venant de droite souffle sur le véhicule 1, la pression en sortie 11' du canal droit 6' est supérieure à la pression en sortie 11 du canal gauche 6, ces deux pressions de sortie restant inférieures à la pression aux entrées 10 et 10' des deux canaux du fait que le véhicule roule. Dans cette situation, le volet de gauche 7 est soumis à une différence de pression plus importante que le volet de droite 7'. Par conséquent, le volet de gauche 7 pivote pour s'ouvrir, et le volet 7' de droite pivote, du fait de la tige 8, dans sa zone de fermeture pour maintenir le canal droit fermé comme visible sur la figure 8.

En cas de vent latéral VL provenant de gauche, le dispositif adopte un état symétrique de celui qui est représenté figure 8.

Le second mode de réalisation de l'invention qui est décrit ci-dessous présente plusieurs similitudes avec le premier mode de réalisation. Les éléments communs au premier et au second mode de réalisation portent ainsi les mêmes références. Cette description est donnée pour le canal gauche 6 du second mode de réalisation, mais elle s'applique aussi bien au canal droit 6'.

Selon le second mode de réalisation, le volet 7 est placé sensiblement à mi-longueur du canal 6, et un déflecteur 21 est avantageusement monté en sortie de canal 6 pour abriter un flux d'air sortant du canal, ce déflecteur 21 étant visible de l'extérieur du véhicule comme le montre la figure 10.

Le déflecteur 21 comprend un bord fixe 22 solidaire du véhicule 1 et un bord dégagé 23, ce qui est notamment visible sur les figures 12 et 13.

L'axe de rotation 17 du volet 7, est situé à mi-longueur de la paroi externe 13 dans une zone 28 qui est bombée vers l'extérieur du véhicule. Cette zone bombée 28 fait face à la zone cylindrique 16 de la paroi interne 12 qui est longée par le bord libre du volet 7 lorsque celui-ci pivote dans sa zone de fermeture, ce que montre la figure 13.

Comme dans le premier mode de réalisation, le volet 7 est apte à pivoter entre une première position A et une deuxième position B, et il peut également occuper une position médiane C située entre les positions A et B. La zone angulaire de fermeture du volet 7 est également délimitée par la première position A et la position médiane C, qui définissent un secteur angulaire de fermeture correspondant à la zone cylindrique 16 de la paroi interne 12. La position médiane C et la deuxième position B délimitent également une zone angulaire d'ouverture du volet 7.

Les extrémités de la tige 8 sont situées pour ce second mode de réalisation plus en avant du véhicule 1 qu'elles ne le sont pour le premier mode de réalisation, si bien qu'une ligne qui relierait ces deux extrémités passerait à travers certains éléments placés à l'avant du véhicule 1, tels qu'une façade de refroidissement repérée par 24 sur la figure 11. De façon à contourner ces éléments, la tige 8 a une forme de U ayant sa base orientée vers l'arrière du véhicule. Cette tige comprend au niveau de ses extrémités deux parties 26 parallèles entre elles, et correspondant aux branches du U, et perpendiculaires à une troisième partie centrale 27 correspondant à la base du U, comme visible sur les figures 16 et 17.

Les parties parallèles 26 de la tige 8 passent au-dessus des parois verticales 12 et 12', et 13 et 13' des canaux 6 et 6'. L'extrémité de chaque partie 26 est reliée par une liaison pivot à une protubérance 29, 29' prolongeant le bord libre 18, 18' de chaque volet 7, 7' au dessus du canal 6, 6', comme visible sur la figure 14. Lorsque le volet 7, 7' pivote entre sa première position A et sa deuxième position B , la protubérance 29, 29' longe un creux 30, 30' en demi-cercle de forme adaptée à son pivotement comme illustré sur la figure 15.

La tige 8 assure un mouvement coordonné des deux volets, comme le montrent les figures 16 et 17, respectivement en cas de vent venant de droite et en cas d'absence de vent latéral VL.

L'invention apporte une solution offrant différents avantages :

Le dispositif selon l'invention est passif en ce sens qu'il peut être conçu sans actionneur électrique ou équivalent, et il compense les effets du vent latéral en annulant ou en atténuant la dépression à laquelle le côté abrité du véhicule est soumis, de façon sensiblement instantanée.

Cette réactivité importante est accentuée par le fait que les ouvertures des canaux sont orientées vers l'avant du véhicule, et sont ainsi soumises à des pressions très élevées lorsque le véhicule roule, ce qui favorise l'établissement rapide d'un régime d'écoulement de l'air important dans ces canaux pour compenser très rapidement les effets de vent latéral.

Cette forte réactivité est particulièrement appropriée en cas de rafales de vent, car elle permet l'établissement quasi-immédiat d'un flux d'air traversant le canal pour réduire la chute de pression induite.

En l'absence de vent latéral, les canaux sont fermés, de telle sorte que l'aérodynamique du véhicule n'est pas pénalisée par des pertes de charges et perturbations qu'introduirait un écoulement d'air dans les canaux. En cas de vent latéral VL, le canal situé du côté exposé au vent reste fermé, de manière à ne pas non plus introduire de perte de charge pénalisant inutilement l'aérodynamique du véhicule en cas de vent latéral.

Dans les exemples illustrés sur les figures, la sortie du canal débouche sur une face latérale du pare-chocs qui est située en avant de la roue avant du véhicule, ce qui correspond à une zone où s'établit une dépression en cas de vent latéral. Mais cette sortie peut être située à tout endroit du véhicule où s'établit une dépression en cas de vent latéral.

## Revendications

1. Dispositif pour véhicule automobile (1), destiné à compenser des perturbations provoquées par un vent latéral lorsque le véhicule (1) roule, le dispositif comprend un canal droit (6') et un canal gauche (6), chaque canal (6, 6') ayant une entrée (10, 10') orientée vers l'avant du véhicule (1) et une sortie (11, 11') située sur un côté du véhicule (1) dans une zone où s'établit une dépression en cas de vent latéral, **caractérisé en ce que** chaque canal (6, 6') est équipé d'un organe d'obturation (7, 7') apte à ouvrir ou fermer le canal (6, 6') qu'il équipe.

2. Dispositif selon la revendication 1, comprenant un élément de liaison (8) liant en mouvement les deux organes d'obturation (7, 7') pour assurer que l'ouverture d'un canal provoque la fermeture de l'autre canal.

3. Dispositif selon la revendication 1, dans lequel les organes d'obturation et l'élément de liaison sont agencés pour permettre aux deux organes d'obturation d'être simultanément fermés.

4. Dispositif selon les revendications 1 à 3, dans lequel chaque organe d'obturation (7, 7') est un volet (7, 7') mobile entre une première position (A) dans laquelle il ferme le canal (6, 6') qu'il équipe et une deuxième position (B) dans laquelle il ouvre le canal (6, 6') qu'il équipe, ce volet (7, 7') étant apte à pivoter autour d'un axe de rotation (17, 17') coïncidant avec un bord de ce volet (7, 7') qui longe une paroi du canal (6, 6'), ce volet (7, 7') comprenant un bord libre (18, 18') qui se déplace par rapport à une autre paroi du canal (6, 6') lorsque ce volet (7, 7') pivote, et dans lequel lorsque le volet (7, 7') pivote vers sa deuxième position (B), son bord libre (18, 18') se déplace en direction de la sortie (11, 11' ) du canal (6, 6') .

5. Dispositif selon la revendication 4 dans lequel chaque canal (6, 6') est obstrué lorsque son volet (7, 7') est situé entre la première position (A) et une position médiane (C), la première position (A) et la position médiane (C) délimitant une zone angulaire de fermeture, dans lequel le canal (6, 6') est ouvert lorsque le volet (7, 7') est situé entre la position médiane (C) et la deuxième position (B), la position médiane (C) et la deuxième position (B) délimitant une zone angulaire d'ouverture, dans lequel l'élément de liaison (8) est une tige mobile (8) ayant une première extrémité (20') liée par une liaison pivot au bord libre (18') du volet (7') du canal droit (6') et une seconde extrémité (20) liée par une autre liaison pivot au bord libre (18) du volet (7) du canal gauche (6) de telle sorte que lorsque le volet (7') du canal droit (6') est dans sa zone angulaire de fermeture, le volet (7) du canal gauche (6) est dans sa zone angulaire d'ouverture et que lorsque la tige (8) occupe une position symétrique par rapport à un plan de symétrie longitudinal (5) du véhicule (1), chaque volet (7, 7') occupe sa position médiane (C).

6. Dispositif selon les revendications 4 et 5 dans lequel le canal (6, 6') comprend une portion cylindrique (16) ayant un rayon valant la distance séparant l'axe de rotation (17, 17') du volet rotatif (7, 7') de son bord libre (18, 18'), pour que le bord libre (18, 18') du volet rotatif (7, 7') longe cette portion cylindrique (16) lorsque ce volet rotatif (7, 7') se trouve dans la zone angulaire de fermeture.

7. Dispositif selon l'une des revendications précédentes, dans lequel l'organe d'obturation (7, 7') est placé en sortie (11, 11') de canal (6, 6').

8. Dispositif selon l'une des revendications précédentes, dans lequel l'organe d'obturation (7, 7') est placé sensiblement à mi-longueur du canal (6, 6').

9. Dispositif selon l'une des revendications précédentes, dans lequel le canal droit (6') est symétrique au canal gauche (6) par rapport à un plan de symétrie longitudinal (5) du véhicule (1) et dans lequel les axes de rotation (17, 17') des deux volets (7, 7') sont disposés de façon symétrique par rapport à ce plan de symétrie (5).

## Claims

1. Device for a motor vehicle (1) which is intended to compensate for disturbances caused by a side wind when the vehicle (1) is travelling, the device comprising a right channel (6') and a left channel (6), each channel (6, 6') having an inlet (10, 10') oriented towards the front of the vehicle (1) and an outlet (11, 11') situated on a side of the vehicle (1) in a zone in which a negative pressure is formed in the event of a side wind, **characterized in that** each channel (6, 6') is equipped with a shut-off member (7, 7' ) designed to open or close the channel (6, 6') that it equips.

2. Device according to Claim 1, comprising a connection element (8) which connects the two shut-off members (7, 7') in movement so as to ensure that the opening of one channel causes the closure of the other channel.

3. Device according to Claim 1, wherein the shut-off members and the connection element are arranged so as to allow the two shut-off members to be closed simultaneously.

4. Device according to Claims 1 to 3, wherein each shut-off member (7, 7') is a flap (7, 7') which can move between a first position (A) in which it closes the channel (6, 6') that it equips and a second position (B) in which it opens the channel (6, 6') that it equips, this flap (7, 7') being designed to pivot about an axis of rotation (17, 17') coincident with an edge of this flap (7, 7') which runs alongside a wall of the channel (6, 6'), this flap (7, 7') comprising a free edge (18, 18') which moves with respect to another wall of the channel (6, 6') when this flap (7, 7') pivots, and wherein, when the flap (7, 7') pivots towards its second position (B), its free edge (18, 18') moves in the direction of the outlet (11, 11') of the channel (6, 6').

5. Device according to Claim 4, wherein each channel (6, 6') is obstructed when its flap (7, 7') is situated between the first position (A) and a mid-position (C), the first position (A) and the mid-position (C) defining an angular closure zone, wherein the channel (6, 6') is open when the flap (7, 7') is situated between the mid-position (C) and the second position (B), the mid-position (C) and the second position (B) defining an angular opening zone, wherein the connection element (8) is a movable rod (8) having a first end (20') connected by a pivot connection to the free edge (18') of the flap (7') of the right channel (6') and a second end (20) connected by another pivot connection to the free edge (18) of the flap (7) of the left channel (6), such that, when the flap (7') of the right channel (6') is in its angular closure zone, the flap (7) of the left channel (6) is in its angular opening zone and such that, when the rod (8) occupies a symmetrical position with respect to a longitudinal plane of symmetry (5) of the vehicle (1) , each flap (7, 7') occupies its mid-position (C).

6. Device according to Claims 4 and 5, wherein the channel (6, 6') comprises a cylindrical portion (16) having a radius equivalent to the distance separating the axis of rotation (17, 17') of the rotary flap (7, 7') from its free edge (18, 18'), in order that the free edge (18, 18') of the rotary flap (7, 7') runs alongside this cylindrical portion (16) when this rotary flap (7, 7') is situated in the angular closure zone.

7. Device according to one of the preceding claims, wherein the shut-off member (7, 7') is placed at the outlet (11, 11') of the channel (6, 6').

8. Device according to one of the preceding claims, wherein the shut-off member (7, 7') is placed substantially halfway along the length of the channel (6, 6').

9. Device according to one of the preceding claims, wherein the right channel (6') is symmetrical to the left channel (6) with respect to a longitudinal plane of symmetry (5) of the vehicle (1), and wherein the axes of rotation (17, 17') of the two flaps (7, 7') are arranged symmetrically with respect to this plane of symmetry (5).

## Patentansprüche

1. Vorrichtung für ein Kraftfahrzeug (1), die dazu bestimmt ist, Störungen zu kompensieren, die durch einen Seitenwind hervorgerufen werden, wenn das Fahrzeug (1) fährt, wobei die Vorrichtung einen rechten Kanal (6') und einen linken Kanal (6) aufweist, wobei jeder Kanal (6, 6') einen Eingang (10, 10'), der zur Vorderseite des Fahrzeugs (1) ausgerichtet ist, und einen Ausgang (11, 11') hat, der sich auf einer Seite des Fahrzeugs (1) in einer Zone befindet, in der sich im Fall eines Seitenwinds ein Unterdruck aufbaut, **dadurch gekennzeichnet, dass** jeder Kanal (6, 6') mit einem Verschlussorgan (7, 7') ausgestattet ist, das den Kanal (6, 6'), den es bestückt, öffnen oder schließen kann.

2. Vorrichtung nach Anspruch 1, die ein Verbindungselement (8) aufweist, das die zwei Verschlussorgane (7, 7') bewegungsmäßig verbindet, um zu gewährleisten, dass die Öffnung eines Kanals das Schließen des anderen Kanals bewirkt.

3. Vorrichtung nach Anspruch 1, bei der die Verschlussorgane und das Verbindungselement eingerichtet sind, um es den zwei Verschlussorganen zu ermöglichen, gleichzeitig geschlossen zu sein.

4. Vorrichtung nach den Ansprüchen 1 bis 3, bei der jedes Verschlussorgan (7, 7') eine Klappe (7, 7') ist, die zwischen einer ersten Stellung (A), in der sie den Kanal (6, 6') verschließt, den sie bestückt, und einer zweiten Stellung (B) beweglich ist, in der sie den Kanal (6, 6') öffnet, den sie bestückt, wobei diese Klappe (7, 7') um eine Drehachse (17, 17') schwenken kann, die mit einem Rand dieser Klappe (7, 7') zusammenfällt, der entlang einer Wand des Kanals (6, 6') verläuft, wobei diese Klappe (7, 7') einen freien Rand (18, 18') aufweist, der sich bezüglich einer anderen Wand des Kanals (6, 6') verschiebt, wenn diese Klappe (7, 7') schwenkt, und bei der, wenn die Klappe (7, 7') in ihre zweite Stellung (B) schwenkt, ihr freier Rand (18, 18') sich in Richtung des Ausgangs (11, 11') des Kanals (6, 6') verschiebt.

5. Vorrichtung nach Anspruch 4, bei der jeder Kanal (6, 6') verschlossen ist, wenn seine Klappe (7, 7') sich zwischen der ersten Stellung (A) und einer Mittelstellung (C) befindet, wobei die erste Stellung (A) und die Mittelstellung (C) eine Verschluss-Winkelzone begrenzen, bei der der Kanal (6, 6') offen ist, wenn die Klappe (7, 7') sich zwischen der Mittelstellung (C) und der zweiten Stellung (B) befindet, wobei die Mittelstellung (C) und die zweite Stellung (B) eine Öffnungs-Winkelzone begrenzen, bei der das Verbindungselement (8) eine bewegliche Stange (8) ist, deren erstes Ende (20') über eine Drehzapfenverbindung mit dem freien Rand (18') der Klappe (7') des rechten Kanals (6') verbunden ist und deren zweites Ende (20) über eine andere Drehzapfenverbindung mit dem freien Rand (18) der Klappe (7) des linken Kanals (6) verbunden ist, so dass, wenn die Klappe (7') des rechten Kanals (6') sich in ihrer Verschluss-Winkelzone befindet, die Klappe (7) des linken Kanals (6) sich in ihrer Öffnungs-Winkelzone befindet, und dass, wenn die Stange (8) eine symmetrische Stellung bezüglich einer Längssymmetrieebene (5) des Fahrzeugs (1) einnimmt, jede Klappe (7, 7') ihre Mittelstellung (C) einnimmt.

6. Vorrichtung nach den Ansprüchen 4 und 5, bei der der Kanal (6, 6') einen zylindrischen Abschnitt (16) aufweist, der einen Radius hat, der gleich dem Abstand ist, der die Drehachse (17, 17') der drehbaren Klappe (7, 7') von ihrem freien Rand (18, 18') trennt, damit der freie Rand (18, 18') der drehbaren Klappe (7, 7') entlang dieses zylindrischen Abschnitts (16) verläuft, wenn diese drehbare Klappe (7, 7') sich in der Verschluss-Winkelzone befindet.

7. Vorrichtung nach einem der vorhergehenden Ansprüche, bei der das Verschlussorgan (7, 7') am Ausgang (11, 11') des Kanals (6, 6') angeordnet ist.

8. Vorrichtung nach einem der vorhergehenden Ansprüche, bei der das Verschlussorgan (7, 7') im Wesentlichen in der halben Länge des Kanals (6, 6') angeordnet ist.

9. Vorrichtung nach einem der vorhergehenden Ansprüche, bei der der rechte Kanal (6') bezüglich einer Längssymmetrieebene (5) des Fahrzeugs (1) symmetrisch zum linken Kanal (6) ist, und bei der die Drehachsen (17, 17') der zwei Klappen (7, 7') bezüglich dieser Symmetrieebene (5) symmetrisch angeordnet sind.
